(19) Europäisches Patentamt
European Patent Office
Office européen des brevets

(11) **EP 1 627 211 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(21) Anmeldenummer: **04738482.1**

(22) Anmeldetag: **06.05.2004**

(51) Int Cl.:
***G01K 1/02*** *(2006.01)*

(86) Internationale Anmeldenummer:
**PCT/DE2004/000954**

(87) Internationale Veröffentlichungsnummer:
**WO 2004/109246 (16.12.2004 Gazette 2004/51)**

(54) **VERFAHREN UND VORRICHTUNG ZUR BESTIMMUNG VON STOFFWERTEN**

METHOD AND DEVICE FOR DETERMINING PHYSICAL CHARACTERISTICS

PROCEDE ET DISPOSITIF POUR DETERMINER DES VALEURS CARACTERISTIQUES

(84) Benannte Vertragsstaaten:
**DE FR GB IT**

(30) Priorität: **26.05.2003 DE 10323651**

(43) Veröffentlichungstag der Anmeldung:
**22.02.2006 Patentblatt 2006/08**

(73) Patentinhaber: **Rational AG**
**86899 Landsberg/Lech (DE)**

(72) Erfinder: **KOHLSTRUNG, Peter**
**86916 Kaufering (DE)**

(74) Vertreter: **Weber-Bruls, Dorothée**
**Forrester & Boehmert,**
**Pettenkoferstrasse 20-22**
**80336 München (DE)**

(56) Entgegenhaltungen:
**DE-A- 4 230 677        GB-A- 2 198 238**
**US-A- 5 257 532        US-A1- 2002 073 853**
**US-B1- 6 169 965**

EP 1 627 211 B1

**Beschreibung**

Die vorliegende Erfindung betrifft ein Verfahren und eine Vorrichtung zur Bestimmung zumindest eines Stoffwertes in einem Gargut.

Verfahren zum Steuern eines Garprozesses und ein hierzu verwendbarer Garprozeßfühler sind aus der DE 199 45 021 A1 bekannt. Bei diesem Verfahren ist vorgesehen, daß mehrere Temperaturwerte, vorzugsweise vier, innerhalb eines Garguts in verschiedenen Einstecktiefen und zumindest ein weiterer Temperaturwert außerhalb des Garguts, vorzugsweise an der Gargutoberfläche, über den Garprozeßfühler aufgenommen und zur Garprozeßsteuerung herangezogen werden. Wesentlich für das bekannte Verfahren ist, daß sich die Kerntemperatur eines Garguts aus der Thermokinetik, also dem zeitlichen Verlauf, von in dem Gargut mittels des Garprozeßfühlers erfaßten Temperaturwerten genau bestimmen läßt, selbst bei nicht exakter Positionierung des Garprozeßfühlers. Darüber hinaus ist gemäß der DE 199 45 021 A1 vorgesehen, daß auch andere Klimaparameter, wie Feuchtewerte, Feuchtedifferenzwerte und/oder Luftbewegungswerte erfaßbar sind, mittels denen spezifische Gargutgrößen, wie Gargutart und/oder die Wärmeleitfähigkeit des Garguts, vorzugsweise durch Extrapolation oder Iteration über die von den Garprozeßfühler erfaßten Werte, bestimmt werden. Dieses Verfahren und der zur Durchführung desselben verwendbare Garprozeßfühler haben sich grundsätzlich bewährt. Jedoch hat sich herausgestellt, daß bei der Bestimmung der Wärmeleitfähigkeit sowie der Gargutart noch ein Verbesserungsbedarf besteht. Dies ist insbesondere darauf zurückzuführen, daß Temperaturschwankungen, die unkontrolliert von Außen das Gargut erreichen, die Messungen derart beeinflussen können, daß eine ausreichend exakte Bestimmung dieser spezifischen Gargutgrößen beeinträchtigt wird.

Aus der DE 42 30 677 A1 sind ein Verfahren und eine Vorrichtung zur Wärmeleitfähigkeit-Bestimmung bei variablen Temperaturfeldem bekannt, bei denen Meßsonden zum Einsatz kommen, die jeweils als dünnes Rohr ausgeführt sein können, in dem sich ein Heizelement befindet, wobei den Heizelementen der Meßsonden während eines Meßvorgangs unterschiedliche Heizleistungen zugeführt werden, so daß aus dem Temperarturverlauf an allen Meßstellen während des Meßvorgangs die Wärmeleitfähigkeit bestimmt werden kann.

Zudem ist aus der US 5,257,532 die Bestimmung des Feuchtegehaltes beispielsweise von Lebensmitteln als Funktion einer thermischen Antwort bekannt. Die US 6,169,965 B1 betrifft ein Verfahren sowie eine Vorrichtung zur Verwendung eines gemeinsamen Frequenzgenerators zwecks Messung ausgewählter Eigenschaften eines Fluides über zumindest ein Heiz- und/oder Sensierelement. In der GB 2 198 238 A sind ein Verfahren und eine Vorrichtung zur Messung des Feuchtegehaltes von Erde durch Einfügen eines Sensors in die Erde, wobei der Sensor ein elektrisches Heizelement aufweist, welches einen Temperaturgradienten innerhalb der Erde aufbaut, beschrieben.

Ein gabelförmiger Temperatursensor als Küchenutensil ist aus der US 2002/0073853 A1 bekannt.

Aufgabe der vorliegenden Erfindung ist es, ein Verfahren zur Bestimmung zumindest eines Stoffwertes in einem Gargut zu liefern, das die Nachteile des Stands der Technik überwindet, insbesondere eine einfache sowie genaue Bestimmung von Stoffwerten, wie spezifischer Gargutgrößen, mit verminderter bzw. im Wesentlichen keiner Beeinflussung von außerhalb des Garguts ermöglicht.

Diese Aufgabe wird erfindungsgemäß gelöst durch ein Verfahren zur Bestimmung zumindest eines Stoffwertes in einem Gargut, mit folgenden Schritten:

- Erzeugen eines zeitlich veränderlichen Temperaturfeldes innerhalb des Garguts;

- Erfassen einer Vielzahl erster Meßwerte in dem Gargut, wobei die ersten Meßwerte zumindest einen ersten Temperaturwert an einer ersten Position und zumindest einen zweiten Temperaturwert an einer von der ersten Position getrennten zweiten Position umfassen;

- Aufnehmen zumindest eines zweiten Meßwertes in und/oder am Gargut, ausgewählt aus thermodynamischen Stoffwerten, wie einem Feuchtewert, elektrischen Stoffwerten, wie einem elektrischen Leitwert, elastischen Stoffwerten, wie einer elastischen Konstante, und/oder optischen Stoffwerten, wie einem Lichtstreufähigkeitswert; und

- Bestimmen zumindest eines ersten Stoffwertes in Form einer Suszeptibilität, wie einer elastischen Suszeptibilität, die Temperaturleitzahl und/oder die spezifische Wärmeleitfähigkeit, und eines zweiten Stoffwertes, ausgewählt aus einer Stoffklasse und/oder zumindest einer spezifischen Stoffgröße, aus den ersten und zweiten Meßwerten.

Dabei kann insbesondere vorgesehen sein, daß dem Gargut an einer dritten Position zur Erzeugung des zeitlich veränderlichen Temperaturfeldes eine vorbestimmte Wärmemenge zugeführt und/oder entzogen wird.

Für die vorgenannte Alternative wird erfindungsgemäß vorgeschlagen, daß die Zuführung und/oder Entziehung der Wärmemenge periodisch erfolgt, vorzugsweise dem Gargut alternierend Wärme zuführt und entzogen wird.

Weitere vorteilhafte Ausführungsformen des erfindungsgemäßen Verfahrens können dadurch gekennzeichnet sein, daß ein vorbestimmter Temperatursprung an der dritten Position zur Erzeugung des zeitlich veränderlichen Temperaturfeldes erzeugt wird.

Bei den drei vorgenannten Alternativen kann insbesondere vorgesehen sein, daß die erste oder zweite Position mit der dritten Position identisch ist.

Mit der Erfindung wird vorgeschlagen, daß das Verfahren sich dadurch auszeichnet, daß mittels der ersten Meßwerte der Amplitudengang und/oder die Phasenlage zumindest einer durch das zeitlich veränderliche Temperaturfeld hervorgerufenen Temperaturwelle an der ersten und der zweiten Position bestimmt wird bzw. werden.

Mit der Erfindung wird auch vorgeschlagen, daß mittels des ersten Stoffwertes und/oder des zweiten Meßwerts zumindest ein zweiter Stoffwert bestimmt wird, wobei der zweite Stoffwert ausgewählt wird aus einer Stoffklasse, wie einer Gargutart, und/oder zumindest einer spezifischen Stoffgröße, wie einer Kerntemperatur des Garguts, einer Geometrie des Garguts, einer Dichte des Garguts, einem Reifegrad des Garguts, einem pH-Wert des Garguts, einer Konsistenz des Garguts, einem Lagerungszustand des Garguts, einer Bräunung des Garguts, einer Krustenbildung des Garguts, einem Vitaminabbau des Garguts, einer Entstehung kanzerogener Substanzen im Gargut, einem Endzeitpunkt eines Prozesses und/oder einem Energieverbrauch während eines.Prozesses, insbesondere zur Erstellung einer Erwärmungsverlaufprognose und/oder Steuerung des Verlaufs eines Prozesses, wie eines Garprozesses.

Dabei ist bevorzugt, daß der zweite Stoffwert durch Extrapolation oder Iteration des zeitlichen Verlaufs der ersten Stoffwerte und/oder des zweiten Meßwerts und/oder durch Vergleich des ersten Stoffwertes und/oder des zweiten Meßwerts mit zumindest zeitweise gespeicherten Vergleichswerten bestimmt wird bzw. werden.

Bei der letztgenannten Alternative wird mit der Erfindung vorgeschlagen, daß zumindest ein Vergleichswert zumindest zeitweise vor, während und/oder nach Erzeugung des zeitlich veränderlichen Temperaturfeldes gespeichert wird.

Auch kann vorgesehen sein, daß die ersten und/oder der zweite Meßwert(e) und/oder der erste und/oder zweite Stoffwert zumindest einer Steuereinrichtung für zumindest eine Wärmestromquelle, zumindest ein mit einem Garraum wechselwirkenden Heiz- und/oder Kühlelement, zumindest einen Lüfter, zumindest eine Einrichtung zum Einführen von Feuchtigkeit in den Garraum und/oder zumindest eine Einrichtung zum Abführen von Feuchtigkeit aus dem Garraum, insbesondere zum Steuern des Garverlaufs und/oder Erreichen eines vorbestimmten Garergebnisses, vorzugsweise mittels Regelung des Temperaturverlaufs, des Feuchtegehalts und/oder der Luftbewegung in dem Garraum, zugeführt wird.

Weiterhin wird mit der Erfindung eine Ausführungsform des erfindungsgemäßen Verfahrens vorgeschlagen, bei der die ersten und/oder der zweite Meßwert(e) mittels eines zumindest teilweise in das Gargut einsteckbaren Garprozeßfühlers erfaßt wird bzw. werden und/oder das zeitlich veränderliche Temperaturfeld mittels zumindest einer von dem Garprozeßfühler umfaßten Wärmestromquelle erzeugt wird.

Ferner wird mit der Erfindung auch eine Vorrichtung in Form eines Garprozeßfühlers zum Bestimmen zumindest eines Stoffwertes in einem Gargut in einem erfindungsgemäßen Verfahren geliefert, umfassend zumindest einen in das Gargut zumindest teilweise, vorzugsweise über einen Griff, einführbaren Schaft, wobei der Schaft zumindest einen an einer der ersten Position entsprechenden ersten Stelle angeordneten ersten Temperatursensor und zumindest einen an einer der zweiten Position entsprechenden zweiten Stelle angeordneten zweiten Temperatursensor sowie zumindest eine an einer der dritten Position entsprechenden dritten Stelle angeordnete Wärmestromquelle umfaßt.

Darüber hinaus kann insbesondere vorgesehen sein, daß der Abstand zwischen der ersten, zweiten und/oder dritten Stelle geringer als eine geometrische Länge einer durch das zeitlich veränderliche Temperaturfeld innerhalb eines Garguts hervorgerufene Temperaturwelle ist.

Eine vorteilhafte Ausführungsform der erfindungsgemäßen Vorrichtung sieht vor, daß eine Wärmeleitung zwischen der ersten, zweiten und/oder dritten Stelle über den Schaft zumindest teilweise reduziert ist, vorzugsweise zumindest ein Bereich des Schafts zwischen der ersten, zweiten und/oder dritten Stelle zumindest teilweise ein Material mit geringerer Wärmeleitfähigkeit als das Gargut umfaßt.

Auch wird mit der Erfindung vorgeschlagen, daß der Schaft ein gabelförmiges freies Ende aufweist, wobei die erste Stelle in einer ersten Zinke der Gabel und die zweite Stelle in einer zweiten Zinke der Gabel angeordnet ist.

Dabei kann insbesondere vorgesehen sein, daß die dritte Stelle in der ersten, zweiten und/oder einer dritten Zinke der Gabel angeordnet ist.

Eine vorteilhafte Ausgestaltung der erfindungsgemäßen Vorrichtung sieht vor, daß die Wärmestromquelle zumindest eine Einrichtung zur Zuführung von Wärmeenergie, wie in Form einer elektrischen Heizeinrichtung und/oder einer Einrichtung zur Leitung eines Erwärmungsfluids, insbesondere in Form von Verbrennungsgasen, Luft, Wasser und/oder dergleichen, und/oder eine Einrichtung zur Abführung von Wärmeenergie, wie in Form zumindest eines Peltierelements und/oder zumindest einer Einrichtung zur Leitung eines Kühlfluids, insbesondere in Form von Luft, Wasser, Stickstoff und/oder dergleichen, umfaßt.

Insbesondere kann eine erfindungsgemäße Vorrichtung gekennzeichnet sein durch zumindest eine mit der Vorrichtung in Wirkverbindung stehende, insbesondere von dieser umfaßten, Sensoreinheit zur Aufnahme des zweiten Meßwerts.

Auch kann zumindest eine mit der Vorrichtung verbindbare, insbesondere von einem Gargerät zur Herstellung, Vorbereitung und/oder Garen von Lebensmitteln umfaßten, Auswerte-, Steuer- und/oder Regeleinheit, wobei die Auswerte-, Steuer- und/oder Regeleinheit vorzugsweise mit einer Speichereinheit verbindbar ist, vorgesehen sein.

Schließlich wird mit der Erfindung vorgeschlagen, daß die Vorrichtung als integraler Bestandteil eines Gargeräts oder als ein tragbares Handgerät ausgeführt ist.

Der Erfindung liegt somit die überraschende Erkenntnis zugrunde, daß durch Erzeugung von Temperaturschwingungen innerhalb eines Garguts und Erfassung der Ausbreitung der sich aufgrund dieser Temperaturschwingungen innerhalb des Garguts ausbildenden wellenartigen Temperaturfeldes an zumindest zwei voneinander getrennten Stellen innerhalb des Garguts eine Bestimmung von Stoffwerten, insbesondere in Form von spezifischen Gargutgrößen, wie der spezifischen Wärmeleitfähigkeit und der Temperaturleitzahl des Garguts, ermöglicht wird. Diese Bestimmung ermöglicht eine nahezu zweifelsfreie Zuordnung des Garguts zu einer Gargutart.

Grundsätzlich unterscheiden sich Körper bzw. Stoffe durch eine Vielzahl von Eigenschaften. Je mehr Eigenschaften eines Körpers bzw. Stoffes bekannt sind, desto genauer kann auf die Art des Stoffes, also die Stoffklasse geschlossen werden. Im Fall von Gargut kann die Art des zu bestimmenden Stoffs jedoch auf wenige Klassen, z. B. auf Lebensmittel oder nur auf verschiedene Fleischarten reduziert werden, so daß wenige Stoffwerte ausreichen, um die Gargutart aus bekannten Klasse auszuwählen.

Neben der vornehmlich beschriebenen Bestimmung der spezifischen Wärmeleitfähigkeit und der Temperaturleitzahl des Garguts können weitere optische, chemische, elastische und/oder elektrische Stoffeigenschaften aufgenommen werden, um ggf. eine durchgeführte Klassenzuordnung, insbesondere Gargutartbestimmung, zu verifizieren. Grundsätzlich reicht jedoch zur Bestimmung der Gargutart die Bestimmung dieser beiden spezifischen Gargutgrößen aus.

Durch Vergleich der erfindungsgemäß bestimmten Stoffwerte mit, insbesondere in einem Speicher, abgelegten Werten wird es möglich, die Gargutart nahezu zweifelsfrei zu bestimmen. Darüber hinaus ermöglicht es die Erfindung, Veränderungen der Stoffwerte während eines Garprozesses und damit den Umwandlungsgrad im Stoff zu erkennen. Weiterhin wird mit Hilfe der während eines Garprozesses bestimmten spezifischen thermischen Gargutgrößen, die neben der Geometrie maßgeblich den Erwärmungsverlauf eines Stoffes bestimmen, eine Voraussage bestimmter Zustände während eines Garprozesses wesentlich verbessert.

Schließlich kann in der Erfindung vorgesehen sein, daß die verwendete Vorrichtung lernfähig ist. Damit ist gemeint, daß, wenn über das erfindungsgemäße Verfahren beispielsweise spezifische Gargutgrößen bestimmt werden, die nicht eindeutig einer bestimmten Gargutart zugeordnet werden können, von einem Benutzer die Gargutart eingegeben werden kann, so daß für spätere Garprozesse eine zweifelsfreie Bestimmung der Gargutart und damit die Qualität eines Garprozeßergebnisses verbessert werden kann.

Weitere Merkmale und Vorteile der Erfindung ergeben sich aus der nachfolgenden Beschreibung, in der das erfindungsgemäße Verfahren anhand von bevorzugten Ausführungsformen der erfindungsgemäßen Vorrichtung unter Bezugnahme auf schematische Zeichnungen im Einzelnen erläutert ist. Dabei zeigt:

Fig 1     eine Querschnittsansicht einer ersten Ausführungsform eines in einem erfindungsgemäßen Verfahren einsetzbaren Garprozeßfühlers;

Fig 2     eine Detailansicht des Garprozeßfühlers der Fig 1; und

Fig 3     eine Teilquerschnittsansicht einer zweiten Ausführungsform eines in einem erfindungsgemäßen Verfahren einsetzbaren Garprozeßfühlers.

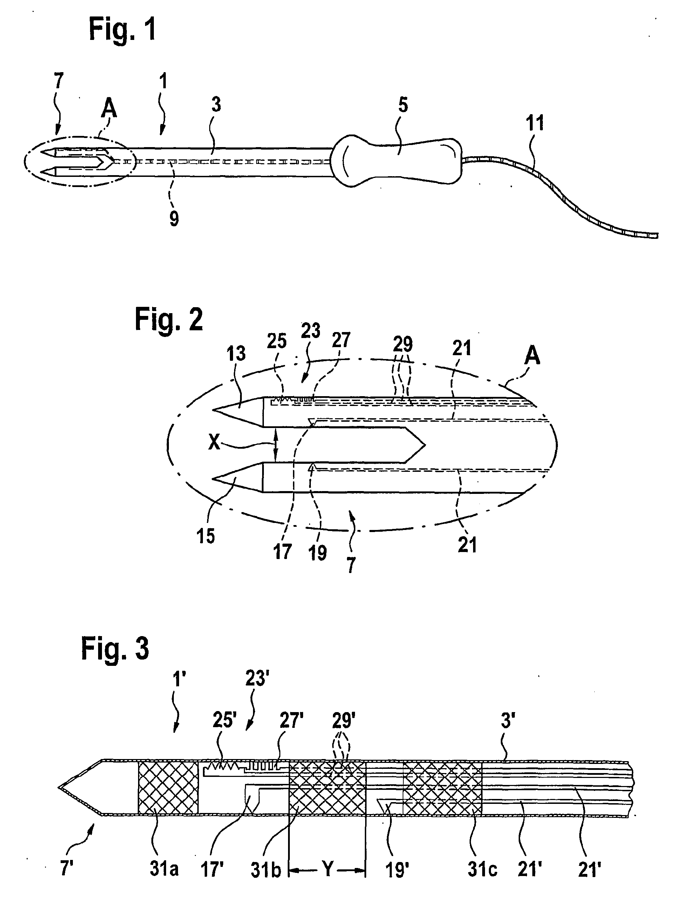

In Figur 1 ist ein Garprozeßfühler 1 dargestellt, der in einem erfindungsgemäßen Verfahren eingesetzt werden kann. Der Garprozeßfühler 1 umfaßt einen Schaft 3, der über einen Handgriff 5 in ein nicht dargestelltes Gargut zumindest teilweise einsteckbar ist, nämlich zumindest im Bereich seiner Spitze 7. Der Aufbau der gabelförmigen Spitze 7 wird genauer anhand der Figur 2 erläutert. Zur Verbindung in der Spitze 7 vorhandener Einbauten des Garprozeßfühlers 1 mit einer nicht dargestellten Auswerte-, Steuer- und/oder Regeleinrichtung verläuft innerhalb des Schafts 3 ein Leitungsbündel 9. Dieses wird durch den Handgriff 5 geführt und steht mit einer Anschlußleitung 11 des Garprozeßfühlers 1 in Verbindung.

In Figur 2 ist eine Detailansicht der Spitze 7 des Garprozeßfühlers 1 der Figur 1 gemäß dem Ausschnitt A dargestellt. Wie Figur 2 zu entnehmen ist, weist die gabelförmige Spitze 7 des Garprozeßfühlers 1 zwei Zinken 13 und 15 auf. Die Zinken 13, 15 sind mit einem Abstand X voneinander beabstandet. An einer ersten Stelle des Garprozeßfühlers 1 in der ersten Zinke 13 ist ein erster Temperatursensor 17 angeordnet, während an einer zweiten Stelle innerhalb des Garprozeßfühlers 1 in der zweiten Zinke 15 ein zweiter Temperatursensor 19 angeordnet ist. Die Temperatursensoren 17, 19 sind über Leitungen 21 mit dem Leitungsbündel 9 verbunden.

Darüber hinaus ist an einer dritten Stelle innerhalb des Garprozeßfühlers 1 an der ersten Zinke 13 eine Wärmestromquelle 23 vorhanden. Die Wärmestromquelle 23 umfaßt eine Einrichtung 25 zur Zuführung von Wärmeenergie an das Gargut, in dem sich die Spitze 7 des Garprozeßfühlers 1 befindet, und eine Einrichtung 27 zur Abführung von Wärmeenergie aus dem Gargut. Die Einrichtungen 25, 27 sind über Leitungen 29 mit dem Leitungsbündel 9 verbunden. Die Einrichtung 25 umfaßt vorzugsweise eine elektrische Heizeinrichtung, während die Einrichtung 27 vorzugsweise ein Peltierelement umfaßt.

Im Folgenden wird nunmehr anhand des Garprozeßfühlers 1 ein erfindungsgemäßes Verfahren erläutert:

Zu Beginn eines Garprozesses wird der Garprozeßfühler 1 zumindest teilweise in ein Gargut eingeführt. Nach der Einführung der Spitze 7 des Garprozeßfühlers 1 in das Gargut kommt so der erste Temperatursensor 17 an einer ersten Position, der zweite Temperatursensor 19 an einer zweiten Position und die Wärmestromquelle 23 an einer dritten Position innerhalb des Garguts zum Liegen. Aufgrund der in Figur 2 dargestellten Anordnung der Temperatursensoren 17, 19 innerhalb der gabelförmigen Spitze 7 des Garprozeßfühlers 1 werden die Temperaturmeßstellen an den Temperatursensoren 17, 19 in einem definierten Abstand X innerhalb des Garguts positioniert.

Zur Bestimmung der Gargutart wird dem Gargut anschließend mittels der Wärmestromquelle 23 über die Einrichtung 25 Wärmeenergie zugeführt und über die Einrichtung 27 Wärmeenergie abgeführt. Dies wird über eine bestimmte Zeitdauer wiederholt, so daß über die Wärmestromquelle 23 lokal innerhalb des Garguts ein zeitlich veränderlicher Temperaturunterschied, also eine Temperaturschwingung, hervorgerufen wird, die sich in Form einer Temperaturwelle in dem Gargut fortpflanzt. Diese Propagation der über die Wärmestromquelle 23 in dem Gargut erzeugten Temperaturschwingung ist in Form von Temperaturveränderungen über die Zeit über die Temperatursensoren 17, 19 erfaßbar. Da sich die Temperatursensoren 17, 19 an zwei verschiedenen Positionen innerhalb des Garguts, insbesondere in unterschiedlichen Abständen zu der Wärmestromquelle 23 befinden, kann über den zeitlichen Verlauf der über die Temperatursensoren 17, 19 erfaßten Temperaturwerte eine Phasenverschiebung und ein Amplitudenverhältnis der Temperaturwellen, die sich für unterschiedliche Gargutarten voneinander unterscheiden, bestimmt werden. Um eine für eine Gargutartbestimmung ausreichend genaue Bestimmung von Phasenverschiebungen und Amplitudenverhältnissen zu ermöglichen, sollte der Abstand X zwischen den Temperatursensoren 17, 19 kürzer als die geometrische Länge einer durch Temperaturschwingungen hervorgerufenen Temperaturwelle in dem Gargut sein. Die Anordnung der Temperatursensoren 17, 19 in den Zinken der Spitze 7 des Garprozeßfühlers 1 reduziert Störeinwirkungen durch den Garprozeßfühler 1. Ferner ist zumindest das Oberflächenmaterial der Spitze 7 des Garprozeßfühlers 1 vorzugsweise derart gewählt, daß die Wärmeleitfähigkeit der Oberfläche der Spitze 7 geringer, als diejenige des umliegenden Garguts ist, so daß es nicht zu einer Störung des Temperaturwellenfeldes, was einer Auswertung der aufgenommenen Meßwerte beeinträchtigen könnte, kommen kann. Insbesondere kann vorgesehen sein, daß entgegen der in Figur 2 dargestellten Ausführungsform einer der beiden Temperatursensoren in der Wärmestromquelle angeordnet ist.

Zur Erzeugung einer Temperaturschwingung innerhalb des Garguts ist beispielsweise vorgesehen, daß die Wärmestromquelle 23 in festen zeitlichen Abständen über die Einrichtung 25 dem Gargut Wärmeenergie zuführt und/ oder über die Einrichtung 27 Wärmeenergie entzieht. Während der daraus resultierenden Erzeugung von Temperaturschwingungen innerhalb des Garguts werden die über die Temperatursensoren 17, 19 aufgenommenen Temperaturwerte über die Leitungen 21, 9, 11 an eine nicht dargestellte Auswerteeinheit weitergegeben, in der die erfaßten Temperaturverläufe zwischengespeichert und analysiert werden. Bei der Analyse werden zunächst die spezifische Wärmeleitfähigkeit λ und die Temperaturleitzahl a des Garguts bestimmt. Bei der Bestimmung dieser spezifischen Gargutgrößen wird von der Annahme ausgegangen, daß zwischen der Ausbreitung von Temperaturwellen in einem Medium und der Ausbreitung von elektrischen oder magnetischen Wellen Analogien bestehen. Die elektrische Impedanz eines Mediums ist durch

$$Z = \sqrt{(R^2 + (\omega L - 1/(\omega * C))^2} \text{ , mit R=Widerstand, } \omega\text{=Kreisfrequenz,}$$

$$L\text{=Induktivität und C=Kapazität,}$$

definiert. Ersetzt man die elektrischen Größen Widerstand "R" und Kapazität "C" durch ihre thermischen Entsprechungen, nämlich D/ (λ*A), mit D=Dicke einer Schicht und A=Fläche der Schicht, als Wärmewiderstand und m*ρ*c_p, mit m=Masse der Schicht, ρ=Dichte der Schicht und c_p = spezifische Wärme der Schicht, als Wärmekapazität und setzt die Induktivität "L" auf Null, so läßt sich folgendes Gedankenmodell durchspielen.

Ein Körper läßt sich durch thermische Massen beschreiben, in denen die gesamte Wärmekapazität gebündelt ist, wobei eine thermische Masse eine unendlich dünne Fläche der Größe "A" darstellt, und Verbindungen zwischen einzelnen thermischen Massen Abstandslängen "d" haben, masselos sind und die spezifische Wärmeleitfähigkeit "λ" aufweisen, so daß sich Folgendes für die thermische Impedanz ergibt:

$$Z_{th} = d/(\lambda * A) * \sqrt{(d^2 + (a/(\omega * d))^2}$$

Während die Größe "ω" im Falle der elektrischen Wellen die Kreisfrequenz der elektrischen Spannung beschreibt, beschreibt sie hier die Kreisfrequenz der Temperaturschwingung.

Da die Stoffwerte "λ" und "a" unabhängig voneinander erscheinen, ist es auch möglich, beide Größen aus einem Meßzyklus zu berechnen.

Durch Übergang von einer endlichen Anzahl von thermischen Massen der Fläche "A" und der Abstandslänge "d" zu unendlich vielen, unendlich dünnen, miteinander verkoppelten, ebenen Schichten läßt sich folgende Standardgleichung für den Wärmefluß in einem Festkörper nutzen: $\partial T/\partial t = \alpha * \partial^2 T/\partial x^2$,
wobei "T" die Temperatur, "t" die Zeit, "a" die Temperaturleitzahl sowie "∂x" infinitesimale Werte des Abstands "d" ist. Somit liegt eine Bestimmungsgleichung für die Größen "a" vor, so daß sich über $a = \lambda/(c_p \cdot \rho)$ auch die Größe "λ" bestimmen läßt.

Daher ermöglicht eine Analyse der aufgenommenen Temperaturverläufe eine Bestimmung der signifikanten spezifischen Gargutgrößen in Form der thermischen Leitfähigkeit λ und der Temperaturleitzahl a. Nachdem diese Stoffwerte bestimmt worden sind, ist in dem erfindungsgemäßen Verfahren vorgesehen, daß die Gargutart über einen Vergleich mit in einer Datenbank abgespeicherten Wertepaaren besagter Stoffwerte bestimmt wird. Gemäß der Erfindung kann dabei insbesondere vorgesehen sein, daß, sozusagen selbstlernend, wenn kein den Meßkurven entsprechendes Wertepaar in der Datenbank vorhanden ist, von einem Benutzer die Datenbank um die vorhandene Gargutart erweitert wird. So wird erreicht, daß bei zukünftigen Garprozessen auch eine automatische Bestimmung dieses "neuen" Garguts mittels des Verfahrens möglich ist und so die Durchführung eines Garprozesses vereinfacht sowie die Qualität des Ergebnisses eines Garprozesses erhöht werden kann.

In weiteren Ausführungsformen der Erfindung kann auch vorgesehen sein, daß über die Wärmestromquelle 23 dem Gargut ausschließlich Wärmeenergie, beispielsweise zyklisch positiv, zugeführt wird oder nur ein definierter Temperatursprung an der Wärmestromquelle 23 erzeugt wird. Zur Auswertung der in Reaktion auf eine derartige Temperaturschwingung aufgenommenen Temperaturwerte kann vorgesehen sein, daß neben dem zuvor beschriebenen Wärmeleitmodell weitere Modelle unter Verwendung numerischer Programme zu Grunde gelegt werden. Bei den alternativen Analysemethoden für die Temperaturverläufe kann insbesondere berücksichtigt werden, daß die Ausbreitung von thermischen Wellen weder kugelförmig, noch zylindrisch und auch nicht eben verläuft und durch den Garprozeßfühler 1 selbst erhebliche thermische Ableitungen und Kapazitäten in das Gargut eingebracht werden. Zur Kompensation dieser Effekte können Methoden eingesetzt werden, die die Verformung der Wellen und den momentanen Wärmestrom an der Wärmestromquelle 23 ausnutzen, um die spezifischen Stoffwerte bzw. Gargutgrößen zu bestimmen. Insbesondere verwenden derartige Analyseverfahren fouriesche Algorithmen direkt oder in abgewandelter Form. Auf diese Weise läßt sich das Analyseergebnis weiter verbessern, und insbesondere ist es so möglich, die Wärmestromquelle 23 konstruktiv einfacher auszuführen, insbesondere auf die Einrichtung 27 zur Abführung von Wärmeenergie aus dem Gargut zu verzichten.

Im Folgenden wird nunmehr anhand der Figur 3 eine weitere Ausführungsform einer in dem erfindungsgemäßen Verfahren einsetzbaren Vorrichtung in Form eines Garprozeßfühlers 1' beschrieben. Figur 3 ist eine Teilquerschnittsansicht des Garprozeßfühlers 1', gemäß der der Garprozeßfühler 1' einen Schaft 3' umfaßt. Im Gegensatz zu dem in den Figuren 1 und 2 dargestellten Garprozeßfühler 1 weist der Garprozeßfühler 1' eine einfache Spitze 7' auf. Wie Figur 3 weiter zu entnehmen ist, weist der Schaft 3' des Garprozeßfühlers 1' drei Bereiche 31a, 31b und 31c auf, die eine geringe Wärmeleitfähigkeit aufweisen. Unter geringer Wärmeleitfähigkeit ist hierbei zu verstehen, daß die Wärmeleitfähigkeit relativ zur Wärmeleitfähigkeit eines nicht dargestellten Garguts, in das der Garprozeßfühler 1' eingeführt wird, gering bzw. vernachlässigbar ist. Innerhalb des Schafts 3' ist eine Wärmestromquelle 23' mit einer Einrichtung 25' zur Zuführung von Wärmeenergie in das Gargut sowie einer Einrichtung 27' zur Abführung von Wärmeenergie aus dem Gargut vorhanden. Darüber hinaus weist der Garprozeßfühler 1' zwei voneinander in Längsrichtung des Schafts 3' beabstandete Temperaturfühler 17' und 19' auf. Die Temperaturfühler 17', 19' sind über Leitungen 21' und die Einrichtung 25', 27' der Wärmestromquelle 23' über Leitungen 29' mit einer nicht dargestellten Auswerteeinheit verbunden. Im Gegensatz zu dem in den Figuren 1 und 2 dargestellten Garprozeßfühler 1 wird den Einrichtungen 25', 27' über die Leitungen 29' ein zyklisch fließendes Kühlmittel bzw. ein zyklisch erwärmtes Fluid als Wärmeträger zugeführt. Insbesondere handelt es sich hierbei um Luft bzw. eine Flüssigkeit.

Wie bereits anhand des Garprozeßfühlers 1 beschrieben, wird über die Wärmestromquelle 23' innerhalb eines den Garprozeßfühters 1' umgebenden Garguts eine Temperaturschwingung erzeugt. Die daraus resultierenden Temperaturwellen propagieren durch das Gargut, was dazu führt, daß an den Temperatursensoren 17', 19' unterschiedliche Temperaturverläufe aufgenommen werden können. Aufgrund der hohen Wärmeleitfähigkeit des Schafts 3' außerhalb der Bereiche 31a, 31b und 31c weisen die Temperatursensoren 17', 19' einen effektiven Abstand Y, also die Breite des dazwischen angeordneten Bereichs 31b, auf. Aufgrund dieses Abstands Y ergibt sich eine Phasendifferenz bzw.

unterschiedliche Amplitudenlage zwischen den durch die Sensoren 17', 19' aufgenommenen Werten, mittels derer, wie zuvor beschrieben, die spezifischen Stoffgrößen bzw. Gargutgrößen Wärmeleitfähgikeit und Temperaturleitzahl bestimmt und daraus die Stoff- bzw. Gargutart geschlußfolgert werden kann.

In weiteren, nicht dargestellten vorteilhaften Ausführungsformen der erfindungsgemäßen Vorrichtung kann vorgesehen sein, daß die Auswerteeinheit bzw. der Datenspeicher in einer portablen Einrichtung realisiert sind. Die so ausgestaltete Vorrichtung stellt somit ein tragbares Meßgerät dar, welches eingesetzt werden kann, um Meßwerte verschiedener Stoffarten zu sammeln oder unabhängig von einem Garprozeß eine Gargutart bestimmen zu können.

Bezugszeichenliste

| | |
|---|---|
| 1, 1' | Garprozeßfühler |
| 3, 3' | Schaft |
| 5 | Handgriff |
| 7, 7' | Spitze |
| 9 | Leitungsbündel |
| 11 | Anschlußleitung |
| 13 | Zinke |
| 15 | Zinke |
| 17, 17' | Temperatursensor |
| 19, 19' | Temperatursensor |
| 21,21' | Leitung |
| 23, 23' | Wärmestromquelle |
| 25, 25' | Einrichtung zur Zuführung von Wärmeenergie |
| 27, 27' | Einrichtung zur Abführung von Wärmeenergie |
| 29, 29' | Leitung |
| 31a, 31b, 31c | Bereich |
| X, Y | Abstand |
| A | Ausschnitt |

**Patentansprüche**

1. Verfahren zur Bestimmung zumindest eines Stoffwertes in einem Gargut, mit folgenden Schritten:

   - Erzeugen eines zeitlich veränderlichen Temperaturfeldes innerhalb des Garguts;
   - Erfassen einer Vielzahl erster Meßwerte in dem Gargut, wobei die ersten Meßwerte zumindest einen ersten Temperaturwert an einer ersten Position und zumindest einen zweiten Temperaturwert an einer von der ersten Position getrennten zweiten Position umfassen;
   - Aufnehmen zumindest eines zweiten Meßwertes in und/oder am Gargut, ausgewählt aus thermodynamischen Stoffwerten, wie einem Feuchtewert, elektrischen Stoffwerten, wie einem elektrischen Leitwert, elastischen Stoffwerten, wie einer elastischen Konstante, und/oder optischen Stoffwerten, wie einem Lichtstreufähigkeitswert; und
   - Bestimmen zumindest eines ersten Stoffwertes in Form einer Suszeptibilität, wie einer elastischen Suszeptibilität, die Temperaturleitzahl und/oder die spezifische Wärmeleitfähigkeit, und eines zweiten Stoffwertes, ausgewählt aus einer Stoffklasse und/oder zumindest einer spezifischen Stoffgröße, aus den ersten und zweiten Meßwerten.

2. Verfahren nach Anspruch 1, **dadurch gekennzeichnet, daß** dem Gargut an einer dritten Position zur Erzeugung des zeitlich veränderlichen Temperaturfeldes eine vorbestimmte Wärmemenge zugeführt und/oder entzogen wird.

3. Verfahren nach Anspruch 2, **dadurch gekennzeichnet, daß** die Zuführung und/oder Entziehung der Wärmemenge periodisch erfolgt, vorzugsweise dem Gargut alternierend Wärme zuführt und entzogen wird.

**4.** Verfahren nach Anspruch 2 oder 3, **dadurch gekennzeichnet, daß**
ein vorbestimmter Temperatursprung an der dritten Position zur Erzeugung des zeitlich veränderlichen Temperaturfeldes erzeugt wird.

**5.** Verfahren nach einem der Ansprüche 2 bis 4, **dadurch gekennzeichnet, daß**
die erste oder zweite Position mit der dritten Position identisch ist.

**6.** Verfahren nach einem der vorangehenden Ansprüche, **dadurch gekennzeichnet, daß** mittels der ersten Meßwerte der Amplitudengang und/oder die Phasenlage zumindest einer durch das zeitlich veränderliche Temperaturfeld hervorgerufenen Temperaturwelle an der ersten und der zweiten Position bestimmt wird bzw. werden.

**7.** Verfahren nach einem der vorangehenden Ansprüche, **dadurch gekennzeichnet, daß** mittels des ersten Stoffwertes und/oder des zweiten Meßwerts zumindest ein zweiter Stoffwert bestimmt wird, wobei der zweite Stoffwert vorzugsweise ausgewählt wird aus einer Stoffklasse, wie einer Gargutart, und/oder zumindest einer spezifischen Stoffgröße, wie einer Kerntemperatur des Garguts, einer Geometrie des Garguts, einer Dichte des Garguts, einem Reifegrad des Garguts, einem pH-Wert des Garguts, einer Konsistenz des Garguts, einem Lagerungszustand des Garguts, einer Bräunung des Garguts, einer Krustenbildung des Garguts, einem Vitaminabbau des Garguts, einer Entstehung kanzerogener Substanzen im Gargut, einem Endzeitpunkt eines Prozesses und/oder einem Energieverbrauch während eines Prozesses, insbesondere zur Erstellung einer Erwärmungsverlaufprognose und/oder Steuerung des Verlaufs eines Prozesses, wie eines Garprozesses.

**8.** Verfahren nach Anspruch 7, **dadurch gekennzeichnet, daß**
der zweite Stoffwert durch Extrapolation oder Iteration des zeitlichen Verlaufs der ersten Stoffwerte und/oder des zweiten Meßwerts und/oder durch Vergleich des ersten Stoffwertes und/oder des zweiten Meßwerts mit zumindest zeitweise gespeicherten Vergleichswerten bestimmt wird bzw. werden.

**9.** Verfahren nach Anspruch 8, **dadurch gekennzeichnet, daß**
zumindest ein Vergleichswert zumindest zeitweise vor, während und/oder nach Erzeugung des zeitlich veränderlichen Temperaturfeldes gespeichert wird.

**10.** Verfahren nach einem der vorangehenden Ansprüche, **dadurch gekennzeichnet, daß** die ersten und/oder der zweite Meßwert(e) und/oder der erste und/oder zweite Stoffwert zumindest einer Steuereinrichtung für zumindest eine Wärmestromquelle, zumindest ein mit einem Garraum wechselwirkenden Heiz- und/oder Kühlelement, zumindest einen Lüfter, zumindest eine Einrichtung zum Einführen von Feuchtigkeit in den Garraum und/oder zumindest eine Einrichtung zum Abführen von Feuchtigkeit aus dem Garraum, insbesondere zum Steuern des Garverlaufs und/oder Erreichen eines vorbestimmten Garergebnisses, vorzugsweise mittels Regelung des Temperaturverlaufs, des Feuchtegehalts und/oder der Luftbewegung in dem Garraum, zugeführt wird.

**11.** Verfahren nach einem der vorangehenden Ansprüche, **dadurch gekennzeichnet, daß** die ersten und/oder der zweite Meßwert(e) mittels eines zumindest teilweise in das Gargut einsteckbaren Garprozeßfühlers erfaßt wird bzw. werden und/oder das zeitlich veränderliche Temperaturfeld mittels zumindest einer von dem Garprozeßfühler umfaßten Wärmestromquelle erzeugt wird.

**12.** Vorrichtung in Form eines Garprozeßfühlers (1, 1') zum Bestimmen zumindest eines Stoffwertes in einem Gargut in einem Verfahren nach einem der vorangehenden Ansprüche, umfassend zumindest einen in das Gargut zumindest teilweise, vorzugsweise über einen Griff (5), einführbaren Schaft (3, 3'), wobei der Schaft (3, 3') zumindest einen an einer der ersten Position entsprechenden ersten Stelle angeordneten ersten Temperatursensor (17, 17') und zumindest einen an einer der zweiten Position entsprechenden zweiten Stelle angeordneten zweiten Temperatursensor (19, 19') sowie zumindest eine an einer der dritten Position entsprechenden dritten Stelle angeordnete Wärmestromquelle (23, 23') umfaßt, wobei eine Sensoreinheit zur Aufnahme des zweiter Messwerts mit der Vorrichtung in Wirkverbindung bringbar ist.

**13.** Vorrichtung nach Anspruch 12, **dadurch gekennzeichnet, daß**
der Abstand (X, Y) zwischen der ersten, zweiten und/oder dritten Stelle geringer als eine geometrische Länge einer durch das zeitlich veränderliche Temperaturfeld innerhalb eines Garguts hervorgerufene Temperaturwelle ist.

**14.** Vorrichtung nach Anspruch 12 oder 13, **dadurch gekennzeichnet, daß**
eine Wärmeleitung zwischen der ersten, zweiten und/oder dritten Stelle über den Schaft (3, 3') zumindest teilweise reduziert ist, vorzugsweise zumindest ein Bereich (3 1 a, 31 b, 31 c) des Schafts (3, 3') zwischen der ersten, zweiten und/oder dritten Stelle zumindest teilweise ein Material mit geringerer Wärmeleitfähigkeit als das Gargut umfaßt.

**15.** Vorrichtung nach einem der Ansprüche 12 bis 14, **dadurch gekennzeichnet, daß** der Schaft (3) ein gabelförmiges freies Ende (7) aufweist, wobei die erste Stelle in einer ersten Zinke (13) der Gabel und die zweite Stelle in einer zweiten Zinke (15) der Gabel angeordnet ist.

**16.** Vorrichtung nach Anspruch 15, **dadurch gekennzeichnet, daß** die dritte Stelle in der ersten, zweiten und/oder einer dritten Zinke (13) der Gabel angeordnet ist.

**17.** Vorrichtung nach einem der Ansprüche 12 bis 16, **dadurch gekennzeichnet, daß** die Wärmestromquelle (23, 23') zumindest eine Einrichtung zur Zuführung von Wärmeenergie, wie in Form einer elektrischen Heizeinrichtung und/oder einer Einrichtung zur Leitung eines Erwärmungsfluids, insbesondere in Form von Verbrennungsgasen, Luft, Wasser und/oder dergleichen, und/oder eine Einrichtung (27, 27') zur Abführung von Wärmeenergie, wie in Form zumindest eines Peltierelements und/oder zumindest einer Einrichtung zur Leitung eines Kühlfluids, insbesondere in Form von Luft, Wasser, Stickstoff und/oder dergleichen, umfaßt.

**18.** Vorrichtung nach einem der Ansprüche 12 bis 17, **dadurch gekennzeichnet, dass** die Sensoreinheit zur Aufnahme des zweiten Messwerts von der Vorrichtung in form eines Garprozessfühlers umfaßt ist.

**19.** Vorrichtung nach einem der Ansprüche 12 bis 18, **gekennzeichnet durch** zumindest eine mit der Vorrichtung verbindbare, insbesondere von einem Gargerät zur Herstellung, Vorbereitung und/oder Garen von Lebensmitteln umfaßten, Auswerte-, Steuer- und/oder Regeleinheit, wobei die Auswerte-, Steuer- und/oder Regeleinheit vorzugsweise mit einer Speichereinheit verbindbar ist.

**20.** Vorrichtung nach einem der Ansprüche 12 bis 19, **dadurch gekennzeichnet, daß** die Vorrichtung als integraler Bestandteil eines Gargeräts oder als ein tragbares Handgerät ausgeführt ist.

**Claims**

**1.** Method for determining at least one physical characteristic in a product being cooked, comprising the following steps:

- generating a temperature field within the product being cooked, which temperature field varies over time;
- detecting a large number of first measured values in the product being cooked, with the first measured values including at least one first temperature value at a first position and at least one second temperature value at a second position which is separate from the first position;
- recording at least one second measured value in and/or on the product being cooked, selected from amongst thermodynamic physical characteristics, such as a moisture value, electrical physical characteristics, such as an electrical conductance, elastic physical characteristics, such as an elastic constant, and/or optical physical characteristics, such as a light-scatter coefficient; and
- determining at least one first physical characteristic in the form of a susceptibility, such as an elastic susceptibility, the heat coefficient and/or the specific thermal conductivity, and a second physical characteristic, selected from amongst a substance class and/or at least one specific physical variable, from the first and second measured values.

**2.** Method according to Claim 1, **characterized in that** a predetermined amount of heat is supplied to and/or drawn from the product being cooked at a third position in order to generate the temperature field which varies over time.

**3.** Method according to Claim 2, **characterized in that** the amount of heat is supplied and/or drawn periodically; heat is preferably alternately supplied to and drawn from the product being cooked.

**4.** Method according to Claim 2 or 3, **characterized in that** a predetermined temperature jump is generated at the third position in order to generate the temperature field which varies over time.

**5.** Method according to one of Claims 2 to 4, **characterized in that** the first or second position is identical to the third position.

6. Method according to one of the preceding claims, **characterized in that** the amplitude response and/or the phase position of at least one temperature wave which is produced by the temperature field which varies over time are/is determined at the first and the second position by means of the first measured values.

7. Method according to one of the preceding claims, **characterized in that** at least one second physical characteristic is determined by means of the first physical characteristic and/or the second measured value, with the second physical characteristic preferably being selected from amongst a substance class, such as a type of product being cooked, and/or at least one specific physical variable, such as a core temperature of the product being cooked, a geometry of the product being cooked, a density of the product being cooked, a degree of maturity of the product being cooked, a pH of the product being cooked, a consistency of the product being cooked, a storage state of the product being cooked, a degree of browning of the product being cooked, a formation of crusts on the product being cooked, a vitamin depletion in the product being cooked, a production of carcinogenic substances in the product being cooked, an end time of a process and/or energy consumption during a process, in particular for creating a heating profile prognosis and/or controlling the course of a process, such as a cooking process.

8. Method according to Claim 7, **characterized in that** the second physical characteristic is determined by extrapolation or iteration of the time profile of the first physical characteristics and/or the second measured value and/or by comparing the first physical characteristic and/or the second measured value with comparison values which are at least temporarily stored.

9. Method according to Claim 8, **characterized in that** at least one comparison value is at least temporarily stored before, during and/or after the temperature field which varies over time is generated.

10. Method according to one of the preceding claims, **characterized in that** the first and/or the second measured values or value and/or the first and/or second physical characteristics or characteristic are/is supplied to at least one control device for at least one heat flow source, at least one heating and/or cooling element which interacts with a cooking chamber, at least one fan, at least one device for introducing moisture into the cooking chamber and/or at least one device for discharging moisture from the cooking chamber, in particular for controlling the cooking process and/or achieving a predetermined cooking result, preferably by means of controlling the temperature profile, the moisture content and/or the movement of air in the cooking chamber.

11. Method according to one of the preceding claims, **characterized in that** the first and/or the second measured values or value are/is detected by means of a cooking process probe which can be at least partially inserted into the product being cooked, and/or the temperature field which varies over time is generated by means of at least one heat flow source which is part of the cooking process probe.

12. Apparatus in the form of a cooking process probe (1, 1') for determining at least one physical characteristic in a product being cooked using a method according to one of the preceding claims, comprising at least one shank (3, 3') which can be at least partially inserted into the product being cooked, preferably by means of a handle (5), with the shank (3, 3') comprising at least one first temperature sensor (17, 17') which is arranged at a first location which corresponds to the first position, and at least one second temperature sensor (19, 19') which is arranged at a second location which corresponds to the second position, and also at least one heat flow source (23, 23') which is arranged at a third location which corresponds to the third position, it being possible to operatively connect a sensor unit for recording the second measured value to the apparatus.

13. Apparatus according to Claim 12, **characterized in that** the distance (X, Y) between the first, second and/or third locations is shorter than a geometric length of a temperature wave which is produced within a product being cooked by the temperature field which varies over time.

14. Apparatus according to Claim 12 or 13, **characterized in that** thermal conduction between the first, second and/or third locations is at least partially reduced by means of the shank (3,3'); at least one region (31a, 31b, 31c) of the shank (3, 3') between the first, second and/or third locations preferably at least partially comprises a material with a lower coefficient of thermal conductivity than the product being cooked.

15. Apparatus according to one of Claims 12 to 14, **characterized in that** the shank (3) has a fork-like free end (7), with the first location being arranged in a first tine (13) of the fork and the second location being arranged in a second tine (15) of the fork.

**16.** Apparatus according to Claim 15, **characterized in that** the third location is arranged in the first, second and/or a third tine (13) of the fork.

**17.** Apparatus according to one of Claims 12 to 16, **characterized in that** the heat flow source (23, 23') comprises at least one device for supplying thermal energy, for example in the form of an electrical heating device and/or a device for conducting a heating fluid, in particular in the form of combustion gases, air, water and/or the like, and/or a device (27, 27') for dissipating thermal energy, for example in the form of at least one Peltier element and/or at least one device for conducting a cooling fluid, in particular in the form of air, water, nitrogen and/or the like.

**18.** Apparatus according to one of Claims 12 to 17, **characterized in that** the sensor unit for recording the second measured value is part of the apparatus in the form of a cooking process probe.

**19.** Apparatus according to one of Claims 12 to 18, **characterized by** at least one evaluation, open-loop and/or closed-loop control unit which can be connected to the apparatus, in particular is part of a cooking device for producing, preparing and/or cooking food, it preferably being possible to connect the evaluation, open-loop and/or closed-loop control unit to a memory unit.

**20.** Apparatus according to one of Claims 12 to 19, **characterized in that** the apparatus is designed as an integral constituent part of a cooking device or as a portable hand-held device.

**Revendications**

**1.** Procédé pour déterminer au moins une propriété de substance dans un produit à cuire, comprenant les étapes consistant à :

- générer un champ de températures variable dans le temps à l'intérieur du produit à cuire ;
- détecter une pluralité de premières valeurs de mesure dans le produit à cuire, les premières valeurs de mesure comportant au moins une première valeur de température dans une première position et au moins une seconde valeur de température dans une deuxième position distincte de la première position ;
- enregistrer au moins une seconde valeur de mesure dans et/ou sur le produit à cuire, sélectionnée parmi des propriétés thermodynamiques de substance, telles qu'une valeur d'humidité, des propriétés électriques de substance, telles qu'une valeur de conductance électrique, des propriétés élastiques de substance, telles qu'une constante élastique, et/ou des propriétés optiques de substance, telles qu'une valeur de diffusion de lumière ; et
- déterminer au moins une première propriété de substance sous la forme d'une susceptibilité, telle qu'une susceptibilité élastique, le coefficient de diffusion thermique et/ou la conductibilité thermique spécifique, et une seconde propriété de substance sélectionnée parmi une classe de substance et/ou au moins une grandeur de substance spécifique, à partir des premières et secondes valeurs de mesure.

**2.** Procédé selon la revendication 1, **caractérisé en ce qu'**une quantité de chaleur prédéterminée est fournie au produit à cuire et/ou est extraite de celui-ci dans une troisième position pour générer le champ de températures variable dans le temps.

**3.** Procédé selon la revendication 2, **caractérisé en ce que** la fourniture et/ou l'extraction de la quantité de chaleur s'effectue de manière périodique, de la chaleur étant de préférence fournie au produit à cuire et extraite de celui-ci de manière alternée.

**4.** Procédé selon la revendication 2 ou 3, **caractérisé en ce qu'**un saut de température prédéterminé est généré dans la troisième position pour générer le champ de températures variable dans le temps.

**5.** Procédé selon l'une quelconque des revendications 2 à 4, **caractérisé en ce que** la première ou deuxième position est identique à la troisième position.

**6.** Procédé selon l'une quelconque des revendications précédentes, **caractérisé en ce que** la caractéristique d'amplitude et/ou la relation de phase d'au moins une onde de température provoquée par le champ de températures variable dans le temps est/sont déterminée(s) dans la première et la seconde position au moyen des premières valeurs de mesure.

7. Procédé selon l'une quelconque des revendications précédentes, **caractérisé en ce qu'**au moins une seconde propriété de substance est déterminée au moyen de la première propriété de substance et/ou de la seconde valeur de mesure, la seconde propriété de substance étant de préférence sélectionnée parmi une classe de substance, telle qu'un type de produit à cuire, et/ou au moins une grandeur de substance spécifique, telle qu'une température à coeur du produit à cuire, une géométrie du produit à cuire, une densité du produit à cuire, un degré de maturation du produit à cuire, un pH du produit à cuire, une consistance du produit à cuire, un état de conservation du produit à cuire, un brunissement du produit à cuire, une formation de croûte sur le produit à cuire, une dégradation des vitamines du produit à cuire, une formation de substances cancérogènes dans le produit à cuire, une fin de processus et/ou une consommation d'énergie pendant un processus, en particulier pour établir un pronostic sur l'évolution du chauffage et/ou pour commander l'évolution d'un processus, tel qu'un processus de cuisson.

8. Procédé selon la revendication 7, **caractérisé en ce que** la seconde propriété de substance est déterminée en extrapolant ou en itérant l'évolution temporelle des premières propriétés de substance et/ou de la seconde valeur de mesure et/ou en comparant la première propriété de substance et/ou la seconde valeur de mesure avec des valeurs comparatives mémorisées de manière au moins temporaire.

9. Procédé selon la revendication 8, **caractérisé en ce qu'**au moins une valeur comparative est mémorisée au moins temporairement avant, pendant et/ou après génération du champ de températures variable dans le temps.

10. Procédé selon l'une quelconque des revendications précédentes, **caractérisé en ce que** les premières et/ou la seconde valeur(s) de mesure et/ou la première et/ou seconde propriété de substance sont transmises à au moins un dispositif de commande d'au moins une source de flux thermique, d'au moins un élément de chauffage et/ou de refroidissement interagissant avec un compartiment de cuisson, d'au moins un ventilateur, d'au moins un dispositif pour introduire de l'humidité dans le compartiment de cuisson et/ou d'au moins un dispositif pour évacuer l'humidité hors du compartiment de cuisson, en particulier pour commander l'évolution de la cuisson et/ou pour obtenir un résultat de cuisson prédéterminé, de préférence au moyen d'une régulation de l'évolution de la température, de la teneur en humidité et/ou du mouvement d'air dans le compartiment de cuisson.

11. Procédé selon l'une quelconque des revendications précédentes, **caractérisé en ce que** les premières et/ou la seconde valeur(s) de mesure est/sont détectée(s) au moyen d'un capteur de processus de cuisson pouvant être enfoncé au moins partiellement dans le produit à cuire, et/ou le champ de températures variable dans le temps est généré au moyen d'au moins une source de flux thermique entourée par le capteur de processus de cuisson.

12. Dispositif ayant la forme d'un capteur de processus de cuisson (1, 1') pour déterminer au moins une propriété de substance dans un produit à cuire pendant un procédé selon l'une quelconque des revendications précédentes, comportant au moins une tige (3, 3') pouvant être introduite, de préférence par l'intermédiaire d'une poignée (5), au moins partiellement dans le produit à cuire, la tige (3, 3') comportant au moins un premier capteur de température (17, 17') agencé à un premier emplacement correspondant à la première position et au moins un second capteur de température (19, 19') agencé à un deuxième emplacement correspondant à la deuxième position, ainsi qu'au moins une source de flux thermique (23, 23') agencée à un troisième emplacement correspondant à la troisième position, un bloc de détection pouvant être mis en liaison active avec le dispositif pour enregistrer la seconde valeur de mesure.

13. Dispositif selon la revendication 12, **caractérisé en ce que** la distance (X, Y) entre les premier, deuxième et/ou troisième emplacements est plus petite qu'une longueur géométrique d'une onde de température provoquée à l'intérieur d'un produit à cuire par le champ de températures variable dans le temps.

14. Dispositif selon la revendication 12 ou 13, **caractérisé en ce qu'**une conduction thermique est au moins partiellement réduite entre les premier, deuxième et/ou troisième emplacements par l'intermédiaire de la tige (3, 3'), au moins une zone (31 a, 31 b, 31 c) de la tige (3, 3') entre les premier, deuxième et/ou troisième emplacements incluant de préférence au moins en partie un matériau ayant une conductibilité thermique plus petite que le produit à cuire.

15. Dispositif selon l'une quelconque des revendications 12 à 14, **caractérisé en ce que** la tige (3) présente une extrémité libre en forme de fourchette (7), le premier emplacement étant situé dans une première dent (13) de la fourchette et le deuxième emplacement dans une seconde dent (15) de la fourchette.

16. Dispositif selon la revendication 15, **caractérisé en ce que** le troisième emplacement est situé dans la première, deuxième et/ou une troisième dent (13) de la fourchette.

**17.** Dispositif selon l'une quelconque des revendications 12 à 16, **caractérisé en ce que** la source de flux thermique (23, 23') comporte au moins un dispositif pour fournir de l'énergie thermique, telle que sous la forme d'un dispositif de chauffage électrique et/ou d'un dispositif pour acheminer un fluide de chauffage, en particulier sous la forme de gaz de combustion, d'air, d'eau et/ou analogue, et/ou un dispositif (27, 27') pour évacuer de l'énergie thermique, telle que sous la forme d'au moins un élément de Peltier et/ou au moins d'un dispositif pour acheminer un fluide de refroidissement, en particulier sous la forme d'air, d'eau, d'azote et/ou analogue.

**18.** Dispositif selon l'une quelconque des revendications 12 à 17, **caractérisé en ce que** le bloc de détection destiné à enregistrer la seconde valeur de mesure est entouré par le dispositif ayant la forme d'un capteur de processus de cuisson.

**19.** Dispositif selon l'une quelconque des revendications 12 à 18, **caractérisé par** au moins une unité d'évaluation, de commande et/ou de régulation pouvant être reliée au dispositif, en particulier entourée par un appareil de cuisson destiné à fabriquer, préparer et/ou cuire des denrées alimentaires, l'unité d'évaluation, de commande et/ou de régulation pouvant de préférence être reliée à une unité de mémorisation.

**20.** Dispositif selon l'une quelconque des revendications 12 à 19, **caractérisé en ce que** le dispositif est mis en oeuvre sous la forme d'un composant monobloc d'un appareil de cuisson ou sous la forme d'un appareil portable à la main.

**Fig. 1**

7 A 1 3 5 11

9

**Fig. 2**

13 25 23 27 29 21 A

X

15 17 19 7 21

**Fig. 3**

1' 23'
25' 27' 29' 3'

7' 31a 17' 31b Y 19' 31c 21' 21'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19945021 A1
- DE 4230677 A1
- US 5257532 A
- US 6169965 B1
- GB 2198238 A
- US 20020073853 A1